# EUROPÄISCHE PATENTSCHRIFT

(11) **EP 0 806 514 B1**
(45) Veröffentlichungstag und Bekanntmachung des Hinweises auf die Patenterteilung: **07.08.2002**
(21) Anmeldenummer: 97105324.4
(22) Anmeldetag: 29.03.1997
(51) Int. Cl.: D06F 37/20, F16F 7/09

(54) **Reibungsdämpfer, insbesondere für Waschmaschinen mit Schleudergang**
Friction damper, in particular for washing machines with a spin phase
Amortisseur à friction, en particulier pour machines à laver avec phase d'essorage

(30) Priorität: 16.04.1996 DE 19615010
(43) Veröffentlichungstag der Anmeldung: 12.11.1997
(73) Patentinhaber: SUSPA Holding GmbH, 90518 Altdorf (DE)
(72) Erfinder: Ehrnsberger, Manfred, 92348 Berg (DE); Mayer, Dieter, 92237 Sulzbach-Rosenberg (DE); Rössner, Reiner, 90518 Altdorf (DE)
(74) Vertreter: Rau, Manfred, Dr. Dipl.-Ing.

(56) Entgegenhaltungen:
- EP-A- 0 407 755
- EP-A- 0 686 720
- EP-B- 0 336 176
- US-A- 3 332 523

## Beschreibung

Die Erfindung betrifft einen Reibungsdämpfer nach dem Oberbegriff des Anspruches 1.

Bei einem derartigen, aus der EP 0 686 720 A1 bekannten Reibungsdämpfer ist das Dämpfungselement verschiebbar auf dem Stößel angeordnet und mittels vorgespannten Schraubenfedern an am Stößel angebrachten Anschlägen abgestützt. Das Dämpfungselement trägt an seiner Außenseite einen Reibungsbelag, der reibend an der Innenwand des Gehäuses anliegt. Durch die Verschiebbarkeit des Dämpfungselementes gegen die vorgespannten Druckfedern wird erreicht, daß bei Beibehaltung eines weichen, geräuscharmen Übergangs an den Umkehrpunkten eine gleichmäßige Dämpfung über den vollen Hub bei großen Schwingungsamplituden und eine weitgehende Dämpfungsfreiheit bei kleinen Schwingungsamplituden erreicht wird. Nachteilig ist, daß der Montageaufwand bei diesem bekannten Reibungsdämpfer verhältnismäßig groß ist. Des weiteren verändert sich die Dämpfungscharakteristik des Dämpfers über einer normalen Lebenszeit von 10 oder mehr Jahren, während derer ein solcher Dämpfer mehrere Millionen Schwingungen ausführt.

Aus der US 3,332,523 A ist ein Reibungsdämpfer bekannt, der ein rohrförmiges Gehäuse aufweist, in dem ein rohrförmiger Stößel verschiebbar angeordnet ist. Am stößelaustrittsseitigen Ende ist das Gehäuse mit einem Dämpfungsgehäuse versehen, in dem ein Dämpfungselement verschiebbar ist. Dieses Dämpfungselement weist in seinem inneren Bereich eine Reibungshülse auf, die an dem Stößel reibend anliegt. Zwischen einer außenliegenden Wand des Dämpfungselementes und der innenliegenden Reibungshülse sind O-Ringe angeordnet, die radial vorgespannt sind und die Reibungshülse radial entsprechend ihrer Vorspannung gegen den Stößel drücken. Diese O-Ringe stützen sich in axialer Richtung gegen einen als Widerlager dienenden Deckel des Dämpfungsgehäuses ab. Zwischen dem gehäuseseitigen Ende des Dämpfungselementes und einem zugeordneten Bodenabschnitt des Dämpfungsgehäuses ist eine Tellerfeder angeordnet. Der Zweck dieser Ausgestaltung liegt darin, daß beim Einfahren des Stößels in das Gehäuse das Dämpfungselement mit der Reibhülse gegen die Kraft der Tellerfeder mitgenommen wird, wodurch wiederum die von den sich gegen den Deckel abstützenden O-Ringen auf die Reibhülse ausgeübte Radialkraft abnimmt, da die O-Ringe in Richtung der Achse des Stößels entlastet werden. Mit zunehmender Einschubgeschwindigkeit des Stößels nimmt diese radiale Entlastung der O-Ringe zu, wodurch wiederum die die Reibhülse gegen den Stößel drückende Anpreßkraft reduziert wird. Insgesamt soll durch diese Maßnahmen erreicht werden, daß die zwischen Stößel und Reibungshülse wirkende Dämpfungskraft weitgehend unabhängig von der Einfahrgeschwindigkeit des Stößels in das Gehäuse wird. Beim Ausfahren des Stößels tritt im Prinzip ein umgekehrter, unerwünschter Effekt ein, d. h. die Dämpfungsverhältnisse beim Ausfahren des Stößels sind undefiniert.

Aus dem ES-Gbm 285 746 ist ein Reibungsdämpfer der gattungsgemäßen Art bekannt, bei dem das rohrförmige Gehäuse im Bereich seiner stößelaustrittsseitigen Endes einen erweiterten Aufnahmeabschnitt aufweist, der zum stößelseitigen Ende hin wiederum geschlossen ist. In diesen ringnutartigen Abschnitt wird ein Reibbelag in Form eines Streifens aus geschäumtem Kunststoff eingelegt. Der Stößel ist an der gesamten Innenwand des rohrförmigen Gehäuses geführt. Das rohrförmige Gehäuse und/oder der Stößel weist im Bereich des jeweiligen freien Endes eine Entlüftungsöffnung auf. Dieser Reibungsdämpfer ist sehr einfach in seinem Aufbau; durch die Art der Führung in Verbindung mit der Art der Anordnung des Dämpfungsbelages sind keine definierten Reibungsverhältnisse erreichbar. Darüber hinaus treten während des Betriebes Pfeifgeräusche auf.

Aus der EP 0 336 176 B1 ist es bekannt, den vorgenannten Reibungsdämpfer in der Weise weiterzubilden, daß der Reibbelag in einem gesonderten Dämpfungsgehäuse angeordnet ist, das von dem stößelaustrittsseitigen Ende her in das rohrförmige Gehäuse eingeschoben und dort axial in Richtung seiner Längsachse festgelegt ist. Hierdurch wird der in ein gesondertes Dämpfungsgehäuse eingelegte bzw. in diesem gehaltene Reibbelag zu einer gesonderten Baugruppe gemacht, die jeweils zur Erzeugung unterschiedlicher Reibungsverhältnisse unterschiedlich ausgebildet sein kann, aber in einen ansonsten identischen Reibungsdämpfer einsetzbar ist.

Aus der EP 0 407 755 A1 ist ein Reibungsdämpfer für Waschmaschinen mit Schleudergang bekannt, der ein Gehäuse mit im wesentlichen kreiszylindrischer Innenwand und einen koaxial in dem Gehäuse verschiebbaren, mit einem Ende aus dem Gehäuse herausgeführten und am anderen Ende mit mindestens einem Dämpfüngs-Kolben versehenen Stößel aufweist. Der Dämpfungskolben ist auf einem Lager-Abschnitt des Stößels zwischen gegen Anschläge anliegenden Federelementen verschiebbar angeordnet. Er weist weiterhin einen gegen die Innenwand des Gehäuses angedrückten Reibungsbelag auf. Die Federelemente können unterschiedlich in Länge und Einstellung ausgebildet sein, um eine verzögerte Mitnahme unterschiedlicher Reibbeläge zu erreichen. Durch diese Ausgestaltung soll eine amplitudenabhängige Schwingungsdämpfung erreicht werden, wobei insbesondere beim Richtungswechsel der Bewegung des Stößels relativ zum Gehäuse ein weicher Übergang erreicht werden soll. Hierdurch soll das System geräuscharm arbeiten.

Der Erfindung liegt die Aufgabe zugrunde, einen Reibungsdämpfer der gattungsgemäßen Art so auszugestalten, daß ein weicher geräuscharmer Übergang an den Umkehrpunkten erreicht wird.

Diese Aufgabe wird erfindungsgemäß durch die Merkmale im Kennzeichnungsteil des Anspruches 1 gelöst.

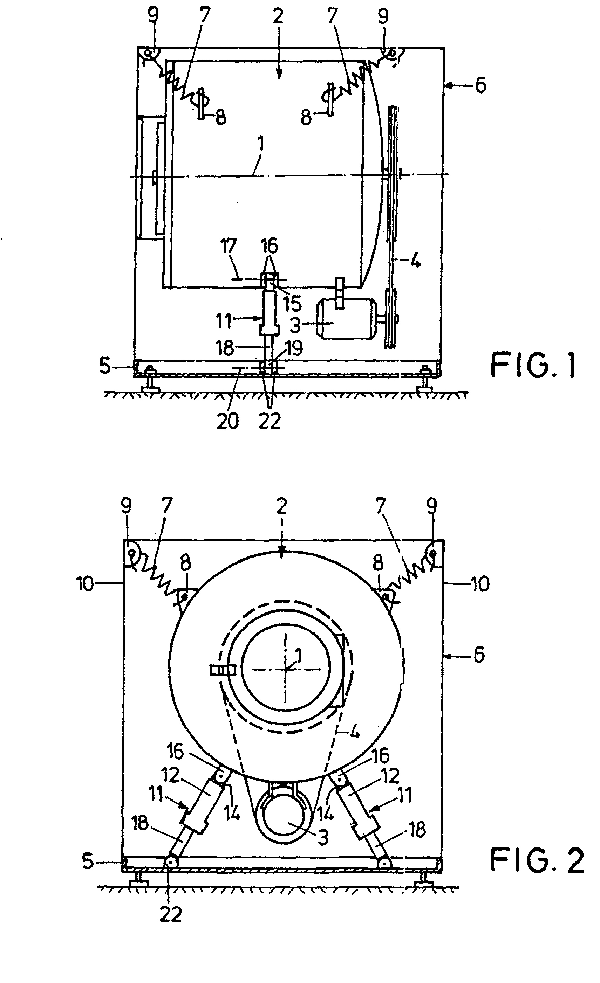

Die Unteransprüche beinhalten zum Teil erfinderische Ausgestaltungen des im Anspruch 1 angegebenen allgemeinen Löschungsprinzips. Weitere Merkmale, Vorteile und Einzelheiten der Erfindung ergeben sich aus der nachfolgenden Beschreibung von zwei Ausführungsbeispielen anhand der Zeichnung. Es zeigt
- Fig. 1: eine Trommelwaschmaschine in schematischer Darstellung in Seiten-ansicht,
- Fig. 2: die Trommelwaschmaschine gemäß Fig. 1 in Vorderansicht,
- Fig. 3: einen Schwingungsdämpfer im Längsschnitt,
- Fig. 4: einen Querschnitt durch den Schwingungsdämpfer gemäß der Schnittlinie IV-IV in einem gegenüber Fig. 3 vergrößerten Maßstab,
- Fig. 5: einen Teil-Längsschnitt durch eine gegenüber Fig. 3 abgewandelte Ausführungsform eines Schwingungsdämpfers in einem gegenüber Fig. 3 vergrößerten Maßstab und
- Fig. 6: einen Querschnitt durch die abgewandelte Ausführungsform eines Schwingungsdämpfers entsprechend der Schnittlinie VI-VI in Fig. 5.

Eine Trommelwaschmaschine mit waagerechter Trommelachse 1 weist ein schwingungsfähiges Waschaggregat 2 mit einem Antriebsmotor 3 auf, der die nicht im einzelnen dargestellte Waschtrommel über einen Riementrieb 4 antreibt. Weitere mit dem Waschaggregat 2 verbundene Bestandteile, beispielsweise ein Getriebe, sind der Einfachheit halber nicht dargestellt. Das schwingungsfähige Waschaggregat 2 ist an einem auf einem durch einen Grundrahmen gebildeten Maschinengestell 5 abgestützten Waschmaschinen-Gehäuse 6 mittels Schrauben-Zugfedern 7 aufgehängt. Die Zugfedern 7 sind einerseits an Ösen 8 angebracht, die im oberen Bereich des Waschaggregates 2 angebracht sind. Andererseits sind sie an Ösen 9 aufgehängt, die an Seitenwänden 1o des Gehäuses 6 ausgebildet sind.

Anstelle einer derartigen Aufhängung des Waschaggregates 2 an Zugfedern 7 kann auch eine bekannte Abstützung des Waschaggregates 2 über sogenannte Federbeine auf dem Maschinengestell 5 vorgesehen sein, wie sie aus der EP o 1o8 217 B1 (entsprechend US-PS 4 991 412) bekannt sind. Entscheidend ist, daß das Waschaggregat 2 frei schwingungsfähig aufgehängt bzw. abgestützt ist.

Zwischen dem Waschaggregat 2 und dem Maschinengestell 5 sind weiterhin Schwingungsdämpfer 11 angeordnet, bei denen es sich um Reibungsdämpfer handelt.

Bei dem nachfolgend geschilderten Ausführungsbeispiel weist der Schwingungsdämpfer 11 ein Gehäuse 12 auf. Das Gehäuse 12 besteht im wesentlichen aus einem zylindrischen Rohr 13, das an einem Ende mittels eines Bodens 14 verschlossen ist. An der Außenseite des Bodens 14 ist eine Gelenkbüchse 15 als Anlenkelement angebracht, mittels derer der Schwingungsdämpfer 11 an einem Lager 16 am Waschaggregat 2 so angebracht wird, daß der Schwingungsdämpfer 11 um eine Schwenkachse 17 relativ zum Waschaggregat 2 schwenkbar angebracht ist, die parallel zur Trommelachse 1 verläuft.

Der jeweilige Schwingungsdämpfer 11 weist weiterhin einen Stößel 18 auf, der an seinem äußeren Ende ebenfalls eine Gelenkbüchse 19 aufweist, deren Schwenkachse 2o gleichermaßen wie die Schwenkachse 17 die Mittel-Längs-Achse 21 des jeweiligen Schwingungsdämpfers 11 senkrecht schneidet. Mit dieser Gelenkbüchse 19 wird der Schwingungsdämpfer 11 in einem am Maschinengestell 5 angebrachten Lager 22 in der Weise schwenkbar gelagert, daß die Schwenkachse 2o ebenfalls parallel zur Trommelachse 1 verläuft.

Der Stößel 18 besteht im wesentlichen aus einem relativ dünnwandigen Metall-Rohr 23, das an seinem außerhalb des Gehäuses 12 befindlichen Ende die Gelenkbüchse 19 trägt, an der ein Deckel 24 ausgebildet ist, mit dem diese Gelenkbüchse 19 mittels einer Sicke 25 am Rohr 23 mit letzterem verbunden ist. Demgegenüber ist das Gehäuse 12 einstückig aus Kunststoff gespritzt.

Das Gehäuse 12 weist an seiner Innenwand 26 radial nach innen vorspringende und parallel zur Achse 21 verlaufende Führungsstege 27 auf, die sich im wesentlichen über die Länge der Innenwand 26 erstrecken. Diese Führungsstege 27 sind in gleichen Winkelabschnitten zueinander angeordnet, und es handelt sich um mindestens drei Führungsstege; im Ausführungsbeispiel sind vier im Abstand von 90° zueinander angeordnete Führungsstege 27 vorgesehen. Um das Einführen des Stößels 18 in das Gehäuse 12 zu erleichtern, ist das Rohr 23 an seinem, der Gelenkbüchse 19 entgegengesetzten Ende mit einer radialen Einschnürung 28 versehen.

An dem der Gelenkbüchse 15 entgegengesetzten stößelaustrittsseitigen Ende 29 weist das Gehäuse 12 ein Dämpfungsgehäuse 30 auf, das aus einem ringzylindrischen Gehäuseabschnitt 31 und einem Anschlagbund 32 besteht. Der ringzylindrische Gehäuseabschnitt 31 weist einen größeren Innendurchmesser auf, als dem Außendurchmesser des Rohres 23 des Stößels 18 entspricht. Der Anschlagbund 32 wird durch einen Übergangsbereich zwischen dem Gehäuseabschnitt 31 und dem Rohr 13 gebildet, das also mit dem Dämpfungsgehäuse 30 einstückig ausgebildet und - wie gesagt - aus Kunststoff hergestellt ist.

Das Dämpfungsgehäuse 30 ist an seinem dem Anschlagbund 32 entgegengesetzten freien Ende mit einem ringförmigen Deckel 33 verschlossen. Im Dämpfungsgehäuse 30 ist ein ringförmiges Dämpfungselement 34 in Richtung der Achse 21 verschiebbar angeordnet. Es weist eine kreiszylindrische Außenfläche 35 auf, die mit leichtem Spiel an parallel zur Achse 21 verlaufenden Führungsstegen 36 des Dämpfungsgehäuses 30 geführt ist. An seiner dem Rohr 23 des Stößels 18 zugewandten Innenseite weist es an seinen beiden Enden ringartige Anschlagflansche 37 auf, zwischen denen eine zylinderringförmige Ausnehmung 38 ausgebildet ist. In dieser Ausnehmung 38 ist ein Reibbelag 39 angeordnet, der beispielsweise aus einem Polyurethan-Schaumstoff besteht, in dessen offenen oder geöffneten Zellen Schmierfett untergebracht ist. Der Reibbelag 39 wird durch die Anschlagflansche 37 gegen ein Herausrutschen aus der Ausnehmung 38 in Richtung der Achse 21 gehindert. Der Reibbelag 39 liegt reibend an dem Rohr 23 des Stößels 18 an.

Zwischen der Ausnehmung 38 und der Außenfläche 35 des Dämpfungselementes 34 sind konzentrisch zur Achse 21 ringzylindrische Ausnehmungen 40, 41 ausgebildet, von denen die eine Ausnehmung 40 zum Anschlagbund 32 und die andere Ausnehmung 41 zum Deckel 33 hin offen ist. Zwischen den beiden Ausnehmungen 40, 41 befindet sich ein Ringsteg 42.

Das Dämpfungselement 34 ist von seinen beiden axialen Enden her mit vorgespannten Schrauben-Druckfedern 43, 44 belastet, von denen die eine Schrauben-Druckfeder 43 einerseits in die Ausnehmung 40 eintaucht und sich am Ringsteg 42 abstützt. Sie stützt sich weiterhin am Anschlagbund 32 ab. Die andere Schrauben-Druckfeder 44 taucht in die Ausnehmung 41 ein und stützt sich von dort aus am Ringsteg 42 ab. Ihr anderes Ende stützt sich am Deckel 33 ab. Damit die Druckfedern 43, 44 im Anschlagbund 32 einerseits und im Deckel 33 andererseits seitenfest geführt sind, sind dort ringförmige nutartige Ausnehmungen 45 vorgesehen. Der Anschlagbund 32 und der Deckel 33 sind somit die Widerlager für die Druckfedern 43, 44.

Die beiden Schrauben-Druckfedern 43, 44 sind im wesentlichen gleich ausgebildet. Wenn sie völlig zusammengedrückt sind, dann tauchen sie weitgehend, aber nicht ganz vollständig in die jeweilige Ausnehmung 40 bzw. 41 ein, d.h. das Dämpfungselement 34 kann sich im wesentlichen über die freie Länge L des Dämpfungsgehäuses 30 zwischen dessen Anschlagbund 32 und dessen Deckel 33 bewegen. Für den maximal möglichen Weg s des Dämpfungselementes 34 aus seiner in der Zeichnung dargestellten mittleren Ruhelage gilt also, daß s etwas kleiner ist als (L - 1)/2, wobei 1 die Länge des Dämpfungselementes 34 in Richtung der Achse 21 ist. Die Druckfedern 43, 44 sind so dimensioniert und vorgespannt, daß bei einer vollständigen Zusammendrückung der einen Druckfeder 43 oder 44, also bei der maximalen Verschiebung des Dämpfungselementes 34 um den Weg s aus seiner mittleren Ruhelage, die jeweils andere Druckfeder 44, 43 immer noch vorgespannt ist.

Auf den Deckel 33 werden ständig Kräfte ausgeübt, die sich aus der Vorspannkraft der Druckfedern 43, 44 ergeben, und die etwas größer sind als die maximal auftretenden Reibungskräfte zwischen dem Dämpfungselement 34 und dem Stößel 18. Hierzu ist der Deckel 33 mit einer an seinem Außenrand 46 ausgebildeten Ringnut 47 versehen, der ein vom ringzylindrischen Gehäuse 31 in Richtung zur Achse 21 vorspringender Ringwulst 48 zugeordnet ist. Nach dem Einsetzen der Druckfeder 43, des Dämpfungselementes 34 und der Druckfeder 44 in das Dämpfungsgehäuse 30 wird der Deckel 33 aufgesetzt und elastisch mit dem Ringwulst 48 verrastet. Dadurch, daß auch der Deckel 33 aus einem elastischen Kunststoff besteht, ist dies möglich. Bei diesem Einrasten des Deckels 33 werden auch die beiden Druckfedern 43, 44 vorgespannt.

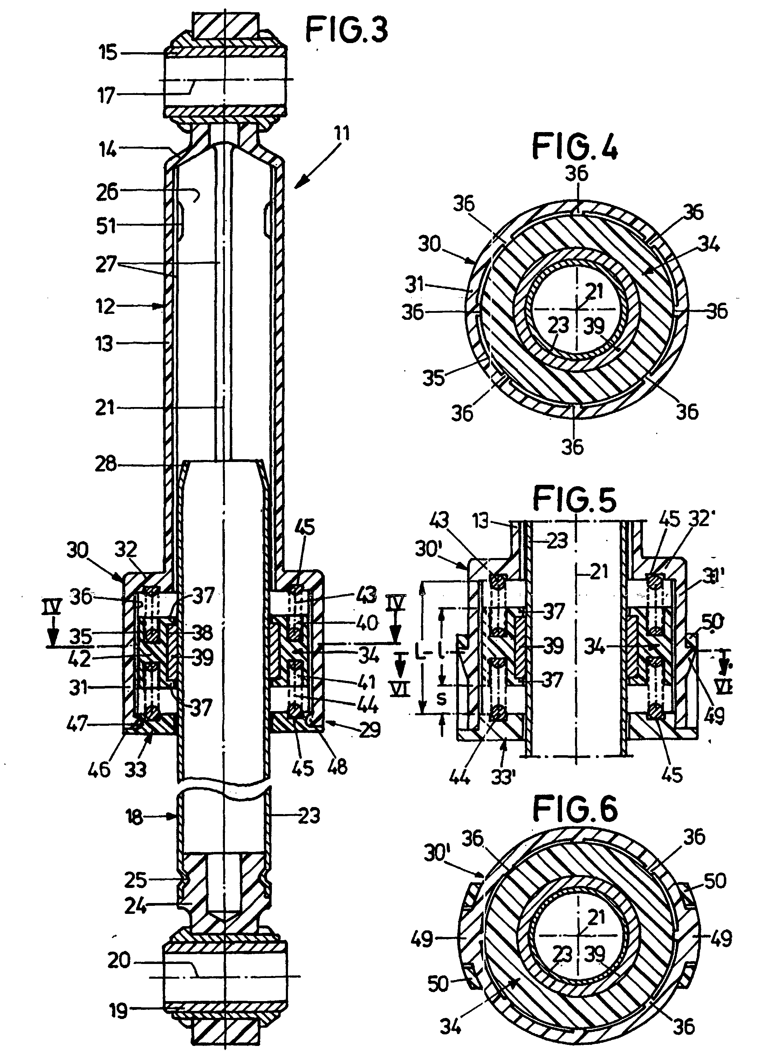

Das Ausführungsbeispiel nach Fig. 5 und 6 unterscheidet sich von dem Ausführungsbeispiel nach Fig. 3 und 4 nur durch die Befestigung des Deckels 33' am Gehäuseabschnitt 31'. Alle übrigen Teile sind identisch ausgebildet, so daß in Fig. 5 und 6 identische Bezugszeichen verwendet werden, ohne daß es einer erneuten Beschreibung bedürfte. An der Außenseite des ringzylindrischen Gehäuseabschnittes 31' des Dämpfungsgehäuses 30' sind Haltevorsprünge 49 ausgebildet, denen am Deckel 33' ausgebildete Haltebügel 50 entsprechen. Wenn der Deckel 33' in der bereits geschilderten Weise montiert wird, dann gleiten die Haltebügel 50 über die Haltevorsprünge 49 und legen sich elastisch hinter diese, wodurch der Deckel 33' fest aber lösbar mit dem Gehäuseabschnitt 31' verbunden ist. Das Gehäuse 12 ist mit Entlüftungs-Öffnungen 51 versehen.

## Patentansprüche

1. Reibungsdämpfer für Waschmaschinen mit Schleudergang,
mit einem rohrförmigen Gehäuse (12), mit einer Achse (21),
mit einem in dem Gehäuse (12) verschiebbar geführten und aus einem Ende desselben herausragenden Stößel (18),
mit jeweils am freien Ende des Gehäuses (12) bzw. des Stößels (18) angebrachten Anschlußelementen (15, 19),
mit einem ringförmigen Dämpfungselement (34), das ringartige Anschlagflansche (37) aufweist, zwischen denen eine zylinderringförmige Ausnehmung (38) ausgebildet ist, in der ein Reibbelag (39) angeordnet ist, der sich reibend an einer Reibfläche abstützt, wobei das Dämpfungselement (34) verschiebbar zwischen ersten und zweiten Widerlagern (32, 33, 33') in Richtung der Achse (21) angeordnet ist, und
mit einer ersten und einer zweiten Druckfeder (43, 44), wobei die erste Druckfeder (43) an dem ersten Widerlager (32) und einer ersten Seite des Dämpfungselementes (34) abgestützt ist, und wobei die zweite Druckfeder (44) am zweiten Widerlager (33, 33') und einer zweiten Seite des Dämpfungselementes (34) abgestützt ist, und wobei die erste und die zweite Druckfeder (43, 44) mit einer Vorspannkraft vorgespannt sind,
**dadurch gekennzeichnet,**
**daß** ein Dämpfungsgehäuse (30) an dem stößelaustrittseitigen Ende des Gehäuses (12) ausgebildet und mit dem ersten Widerlager (32) und dem zweiten Widerlager (33, 33') versehen ist,
**daß** das Dämpfungselement (34) in dem Dämpfungsgehäuse zwischen den Widerlagern (32, 33, 33') angeordnet ist,
**daß** das Dämpfungselement (34) mit einer Außenfläche (35) im Dämpfungsgehäuse (30) geführt ist,
**daß** die Anschlagflansche (37) an der Innenseite des Dämpfungselementes (34) ausgebildet sind, und
**daß** die Reibfläche durch die Oberfläche des Stößels (18) gebildet ist.

2. Reibungsdämpfer nach Anspruch 1, **dadurch gekennzeichnet, daß** die Druckfedern durch Schrauben-Federn (43, 44) gebildet sind.

3. Reibungsdämpfer nach Anspruch 1 oder 2, **dadurch gekennzeichnet, daß** die Druckfedern (43, 44) identisch ausgebildet sind.

4. Reibungsdämpfer nach einem der Ansprüche 1 bis 3, **dadurch gekennzeichnet,**
**daß** die Vorspannkraft der Druckfedern (43, 44) in einer mittleren Ruhelage des Dämpfungselementes (34) etwa gleich der Haftreibungskraft zwischen Dämpfungselement (34) und Stößel (18) ist.

5. Reibungsdämpfer nach einem der Ansprüche 1 bis 4, **dadurch gekennzeichnet,**
**daß** der maximale Verschiebeweg (s) des Dämpfungselementes (34) aus einer mittleren Ruhelage im Dämpfungsgehäuse (30, 30') größer ist als die Amplitude bei überkritischer Drehzahl der Waschmaschine.

6. Reibungsdämpfer nach einem der Ansprüche 1 bis 5, **dadurch gekennzeichnet, daß** die Druckfedern (43, 44) derart vorgespannt sind, daß bei vollständiger Zusammendrückung der auf einer Seite des Dämpfungselementes (34) befindlichen Druckfeder (43, 44) die auf der anderen Seite des Dämpfungselementes (34) befindliche Druckfeder (44, 43) angenähert, aber noch nicht vollständig entspannt ist

7. Reibungsdämpfer nach einem der Ansprüche 2 bis 6, **dadurch gekennzeichnet, daß** mindestens eine Schrauben-Druckfeder (43, 44) teilweise in einer ringförmigen Ausnehmung (40, 41) des Dämpfungselementes (34) angeordnet und abgestützt ist.

8. Reibungsdämpfer nach Anspruch 7, **dadurch gekennzeichnet, daß** beide Schrauben-Druckfedern (43, 44) in durch einen Ringsteg (42) voneinander getrennten Ausnehmungen (40, 41) des Dämpfungselementes (34) angeordnet sind.

9. Reibungsdämpfer nach Anspruch 7 oder 8, **dadurch gekennzeichnet, daß** die Schrauben-Druckfeder (43, 44) in vollständig zusammengedrücktem Zustand sich weitgehend aber nicht vollständig in der Ausnehmung (40, 41) befindet.

10. Reibungsdämpfer nach einem der Ansprüche 1 bis 9, **dadurch gekennzeichnet, daß** das Widerlager für die eine Schrauben-Druckfeder (43) durch einen Anschlagbund (32) des Dämpfungsgehäuses (30, 30') und das Widerlager für die andere Druckfeder (44) durch einen mit dem Dämpfungsgehäuse (30, 30') verbundenen ringförmigen Deckel (33, 33') gebildet ist.

11. Reibungsdämpfer nach Anspruch 10, **dadurch gekennzeichnet, daß** der Deckel (33, 33') mit dem Dämpfungsgehäuse (30, 30') elastisch verrastet ist.

## Claims

1. A frictional damper, in particular for spinner-type washing machines, comprising
a tubular housing (12) having an axis (21);
a tappet (18) guided displaceably in the housing (12) and projecting over an end thereof;
articulation elements (15, 19) mounted on the free end of the housing (12) and of the tappet (18);
an annular damping element (34) having annular stop flanges (37) with a cylindrical recess (38) there-between, in which a friction lining (39) is disposed, frictionally supporting itself on a friction surface, with the damping element (34) being displaceable in the direction of the axis (21) between first and second abutments (32, 33, 33'); and
a first and a second compression spring (43, 44), the first compression spring (43) supporting itself on the first abutment (32) and on a first side of the damping element (34), and the second compression spring (44) supporting itself on the second abutment (33, 33') and on a second side of the damping element (34), and the first and the second compression springs (43, 44) being biased by a pre-load;
**characterized**
**in that** a damping housing (30) is formed on the end of the housing (12) where the tappet exits and is provided with the first abutment (32) and the second abutment (33, 33');
**in that** the damping element (34) is disposed in the damping housing between the abutments (32, 33, 33');
**in that** the damping element (34) is guided by an outer surface (35) in the damping housing (30);
**in that** the stop flanges (37) are formed on the inside of the damping element (34); and
**in that** the friction surface is formed by the surface of the tappet (18).

2. A frictional damper according to claim 1, **characterized in that** the compression springs are helical compression springs (43, 44).

3. A frictional damper according to claim 1 or 2, **characterized in that** the compression springs (43, 44) are of identical design.

4. A frictional damper according to one of claims 1 to 3, **characterized in that** the pre-load of the compression springs (43, 44), in a central position of the damping element (34), is approximately equal to the frictional adhesion between the damping element (34) and the tappet (18).

5. A frictional damper according to one of claims 1 to 4, **characterized in that** the length (s) of maximal displacement of the damping element (34) out of a central position of rest in the damping housing (30, 30') is greater than the amplitude in the case of supercritical speed of the washing machine.

6. A frictional damper according to one of claims 1 to 5, **characterized in that** the compression springs (43, 44) are pre-loaded in such a way that, upon complete compression of the compression spring (43) on one side of the damping element (34), the compression spring (44) on the other side of the damping element (34) is approximately, but not entirely, released.

7. A frictional damper according to one of claims 2 to 6, **characterized in that** at least one helical compression spring (43, 44) is partially disposed and supported in an annular recess (40, 41) of the damping element (34).

8. A frictional damper according to claim 7, **characterized in that** both helical compression springs (43, 44) are disposed in recesses (40, 41) of the damping element (34) that are separated from each other by an annular rib (42).

9. A frictional damper according to claim 7 or 8, **characterized in that** the helical compression spring (43, 44), in a completely compressed condition, is located substantially, but not entirely, in the recess (40, 41).

10. A frictional damper according to one of claims 1 to 9, **characterized in that** the abutment for one helical compression spring (43) is formed by a stop collar (32) of the damping housing (30, 30') and the abutment for the other compression spring (44) is formed by an annular cover (33, 33') joined to the damping housing (30, 30').

11. A frictional damper according to claim 10, **characterized in that** the cover (33, 33') is elastically locked into engagement with the damping housing (30, 30').

## Revendications

1. Amortisseur à friction pour des machines à laver avec phase d'essorage comprenant
un carter tubulaire (12) avec un axe (21);
un coulisseau (18) qui est guidé de manière coulissante dans le carter (12) et qui dépasse de l'une des extrémités du carter (12);
des éléments de liaison (15, 19) qui sont respectivement attachés à l'extrémité libre du carter (12) et du coulisseau (18);
un élément d'amortissement (34) annulaire qui comporte des collerettes de butée (37) en forme d'anneau avec un creux cylindrique entre eux, dans lequel est disposée une garniture à friction (39) qui s'appuie de manière frictionnante à une face de friction, l'élément d'amortissement (34) étant disposé de manière déplaçable dans le sens de l'axe (21) entre premières et deuxièmes butées (32, 33, 33'); et
un premier et un deuxième ressort de pression (43, 44), le premier ressort de pression (43) s'appuyant à la première butée (32) et à un premier côté de l'élément d'amortissement (34) et le deuxième ressort de pression (44) s'appuyant à la deuxième butée (33, 33') et à un deuxième côté de l'élément d'amortissement (34), et le premier et le deuxième ressort d'amortissement (43, 44) étant précontraints;
**caractérisé**
**en ce qu**'un carter d'amortissement (30) est formé à l'extrémité, située côté sortie du coulisseau, du carter (12) et pourvu de la première butée (32) et de la deuxième butée (33, 33');
en ce que l'élément d'amortissement (34) est disposé dans le carter d'amortissement entre les butées (32, 33, 33');
en ce que l'élément d'amortissement (34) est guidé par une face extérieure (35) dans le carter d'amortissement (30);
en ce que les collerettes de butée (37) sont formées sur le côté intérieur de l'élément d'amortissement (34); et
en ce que la face de friction est constituée par la surface du coulisseau (18).

2. Amortisseur à friction selon la revendication 1, **caractérisé en ce que** les ressorts de pression sont des ressorts cylindriques de compression (43, 44).

3. Amortisseur à friction selon la revendication 1 ou 2, **caractérisé en ce que** les ressorts de pression (43, 44) sont formés de manière identique.

4. Amortisseur à friction selon l'une quelconque des revendications 1 à 3, **caractérisé en ce que** la précontrainte des ressorts de pression (43, 44), dans une position de repos de milieu de l'élément d'amortissement (34), est environ égale au frottement par adhérence entre l'élément d'amortissement (34) et le coulisseau (18).

5. Amortisseur à friction selon l'une quelconque des revendications 1 à 4, **caractérisé en ce que** le déplacement maximum (s) de l'élément d'amortissement (34) à partir d'une position de repos de milieu dans le carter d'amortissement (30, 30') est plus grand que l'amplitude lors d'une vitesse de rotation surcritique de la machine à laver.

6. Amortisseur à friction selon l'une quelconque des revendications 1 à 5, **caractérisé en ce que** les ressorts de pression (43, 44) sont précontraints de telle sorte que, lors de compression complète du ressort de pression (43, 44) situé d'un côté de l'élément d'amortissement (34), le ressort de pression (44, 43) situé de l'autre côté de l'élément d'amortissement (34) n'est pas encore relâché complètement, mais approximativement.

7. Amortisseur à friction selon l'une quelconque des revendications 2 à 6, **caractérisé en ce qu'**au moins un ressort cylindrique de compression (43, 44) est partiellement disposé et appuyé dans un creux annulaire (40, 41) de l'élément d'amortissement (34).

8. Amortisseur à friction selon la revendication 7, **caractérisé en ce que** les deux ressorts cylindriques de compression (43, 44) sont disposés dans des creux (40, 41) de l'élément d'amortissement (34) qui sont séparés par une nervure annulaire (42).

9. Amortisseur à friction selon la revendication 7 ou 8, **caractérisé en ce que** le ressort cylindrique de compression (43, 44), en état complètement comprimé, se trouve largement, mais non complètement, dans le creux (40, 41).

10. Amortisseur à friction selon l'une quelconque des revendications 1 à 9, **caractérisé en ce que** la butée pour l'une des ressorts cylindriques de compression (43) est formée par un épaulement (32) du carter d'amortissement (30, 30') et la butée pour l'autre ressort de pression (44) est formée par un couvercle (33, 33') annulaire qui est relié au carter d'amortissement (30, 30').

11. Amortisseur à friction selon la revendication 10, **caractérisé en que** le couvercle (33, 33') est enclenché élastiquement au carter d'amortissement (30, 30').
